Europäisches Patentamt

(19) European Patent Office

Office européen des brevets

(11) Publication number: **0 221 856**
**A2**

(12) **EUROPEAN PATENT APPLICATION**

(21) Application number: **86830036.9**

(22) Date of filing: **13.02.86**

(51) Int. Cl.⁴: **A 23 B 9/00**
**A 23 B 7/144, A 23 B 7/148**

(30) Priority: **04.11.85 IT 2271185**

(43) Date of publication of application:
**13.05.87 Bulletin 87/20**

(84) Designated Contracting States:
**AT BE CH DE FR GB LI NL**

(71) Applicant: **ISOLCELL EUROPA S.r.l.**
**Via A. Meucci Strada Zone Industriale**
**I-39055 Laives (IT)**

(72) Inventor: **Pruneri, Dario**
**Via Colonia, 1**
**I- Bolzano (IT)**

**Zanon, Karl**
**Via Sibilla, 11**
**I-39012 Merano (IT)**

(74) Representative: **Zini, Alessandro**
**Ufficio Tecnico Internazionale Brevetti Ing. Alessandro**
**Zini Piazza Castello 1**
**I-20121 Milano (IT)**

(54) A method of pest controlling foods and a system for carrying out said method.

㊗ In order to pest control food such as f.e. beans and dried mushrooms there is provided in a gas tight food storage room an inert $O_2$ lacking atmosphere with $O_2$ between O and 5%. $CO_2$ between 1 and 20% and the balance $N_2$. This atmosphere is maintained until mortality of the pest. The system for providing this atmosphere includes essentially a generator, which can be a combustion chamber (1) associated to a catalytic chamber (2) (in the case of an open circuit system in which air is drawn from the atmosphere) or a catalytic chamber alone (in the case of a closed circuit system in which air is drawn from the food storage room itself) and a cooling tower (3).

The system is generally provided also with an evaporator (5) and a condenser (6) to control the humidity of the inert atmosphere, and a heat exchanger (7) in which the combustion heat is utilized to heat the inert atmosphere at a temperature which speeds up the mortality of the pest.

Fig. 1

Bundesdruckerei Berlin

## Description

A method of pest controlling foods and a system for carrying out said method

The present invention relates to a method of pest controlling foods. such as f.e. beans and dried mushrooms and a system for carrying out said method.

The method of pest controlling foods according to the invention comprises the steps of providing an inert $O_2$ lacking atmosphere with $O_2$ between 0 and 5%, $CO_2$ between 1 and 20% and the balance $N_2$. exposing the food to said atmosphere in a gas tight food storage room and maintaining said atmosphere in the food storage room until the full mortality of the food pest.

It has been noted that by exposing the food pest to said atmosphere a 100% mortality is obtained within 3-35 days depending on the temperature and relative humidity of the food storage room.

According to a feature of the present invention the inert atmosphere is heated to a temperature higher than the ambient temperature to reduce the mortality time of the pest and is maintained at that temperature.

At a temperature f.e. of 27°C the mortality time is 10 days, which time lengthens in the case the temperature lowers.

The mortality is total for eggs, larvas, pupas and adults, i.e. for all the different stages of development of the pest.

The invention includes also a system for carrying out the method.

The system according to the invention is characterized in that it comprises an inert atmosphere generator having two inputs. the one connected to an air intake and the other to a combustion gas intake and a cooling tower also provided with two inputs, the one connected to the output of the inert atmosphere generator and the other to a cooling water intake, and further provided with two outputs, the one connected to a gas tight food storage room and the other to a cooling water discharge.

The invention will be better understood from the following detailed description, given merely as an example and therefore in no limiting sense, of two embodiments thereof. referring to the accompanying drawings, in which:

Fig. 1 is a diagram of a system for carrying out the method according to the invention; and

Fig. 2 is a diagram of an alternative embodiment of the system according to the invention.

The difference between the two systems is that in the first one the desired atmosphere is obtained in an open circuit., whereas in the second one it is obtained in a closed circuit.

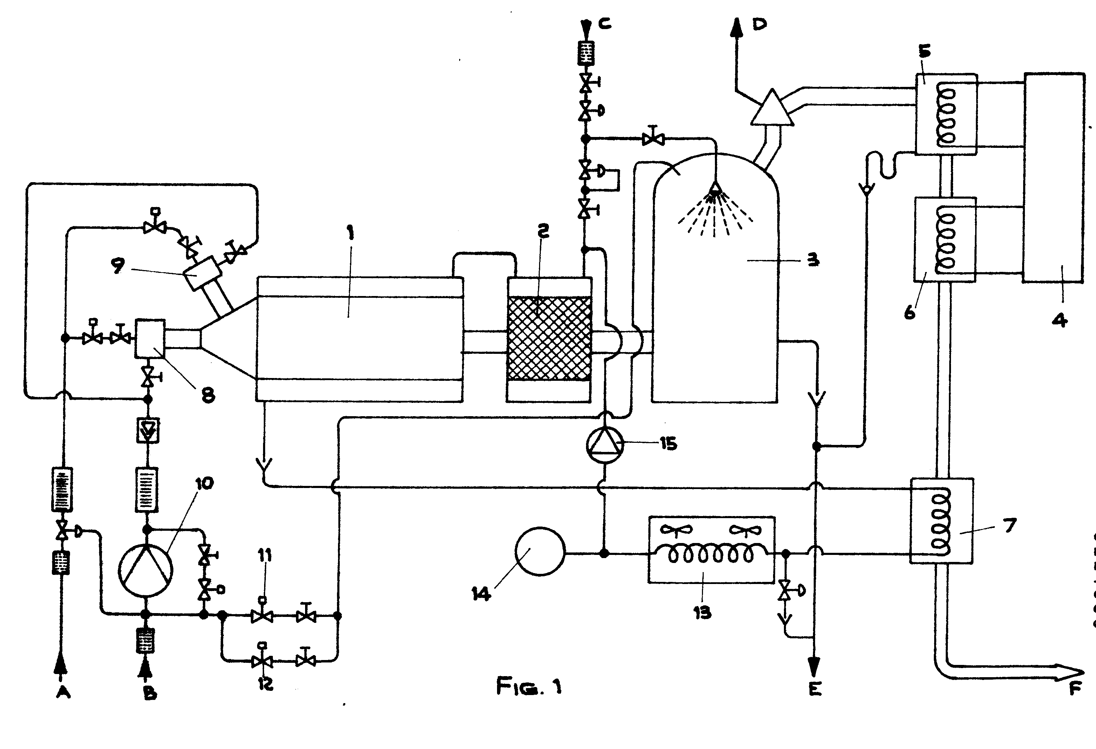

Referring first to Fig. 1, an isothermic generator comprises a combustion chamber 1 provided with two burners. a main burner 8 and a secondary burner 9 connected by means of conduits and valves on the one side to a combustion gas input referred to as A and on the other side, through a fan 10, to an atmospheric air input referred to as B. The output of the combustion chamber 1 is connected to the input of a catalytic chamber 2 whose output is connected to the input of a cooling tower 3. An output of the cooling tower is connected, through an evaporator 5 and a condenser 6 being part of a refrigeration system 4, as well as through a heat exchanger 7, to the food storage room, not shown, the conduit leading to the storage room being referred to as F.

The cooling tower is also in connection with a cooling water input C, which water is then discharged at E. The combustion chamber 1 and the catalytic chamber 2 are provided with a closed cooling circuit. The water heated in the combustion chamber 1 and the catalytic chamber 2, is supplied, through the pump 15, to the heat exchanger 7 and the heat exchanger 13 to exchange the heat previously absorbed in the combustion chamber 1 and the catalytic chamber 2. This circuit remains at a constant operation pressure in the case of lack of water or coolant supplied through the input C. In the case of overpressures the liquid is discharged in the discharge E through a safety device. D indicates the delivery outwards in the starting stage.

The system comprises finally two modulating valves 11, 12 inserted between the air intake B and an input of the cooling tower 3 controlled by a check or analysis system not shown.

The operation of the described system is as follows:

The combustion gas, propane or methane, or other combustible, f.e. gas oil, is taken from bottles or the suply line and caused to flow from A to the burners 8 and 9 at a predetermined pressure. Simultaneously, a predetermined air quantity is supplied continuously, by an electric fan 10, to the burners 8 and 9 of a special type in which the combustible gas or other combustible is mixed with air and then burnt in the combustion chamber 1 without leaving residual combustion products. In this operation air oxygen is lowered from 21% to 0,2 -0,3%. The combustion products are thereafter cooled, f.e. to 500°C by the cooling jacket of the combustion chamber 1. The inert gas thus obtained is caused to flow through the catalyst 2 where possible unburnt parts are converted to $CO_2$ and $H_2O$ without producing residual combustion products.

The gas flowing out from the catalyst is supplied to the cooling tower 3 where it takes the desired temperature. It is then caused to flow in the conditioning system comprising the evaporator 5 and the condenser 6 to control the relative humidity of the produced atmosphere before introducing it in the food storage room. Finally, the gas flows in the heat exchanger 7 where it is moderately heated to shorten the mortality time of the pest.

The storage room is suitably provided with an over-pressure valve to balance the pressures developed upon introduction of the desired atmosphere.

The generator can have a variable flow rate so that once the desired concentrations of $O_2$, $CO_2$ and $N_2$ are achieved, they can be maintained with a reduced flow of the generated atmosphere so as to maintain the food storage room at a pressure f.e. of 1-5 mm column of water and to prevent entry of air from outside with a reduced operating cost.

To this end, once the desired concentration is achieved, the main burner 8 is blown out and only the secondary burner 9 is left operative which burns only the quantity of air - combustion gas mixture strictly necessary for maintaining a minimum desired pressure in the storage room.

The modulating valves 11 and 12 have the function to control the supply of combustible gas in dependence on the changes in the oxygen concentration in the inert atmosphere so as to maintain this oxygen concentration constant.

The generator has a combustion heat recovery device which is used for heating the air of the food storage room undergoing the pest control. This device comprises the heat exchanger 13 in which there is caused to flow in closed circuit by the pump 15 the cooling water of the jackets of the catalytic chamber 2 and the combustion chamber 1 which yealds heat substracted to the two chambers, in the pipe coil of the heat exchanger 7, to the inert atmosphere generated by the isothermic generator and, in the pipe coil of the heat exchanger 13 directly to the atmosphere of the food storage room.

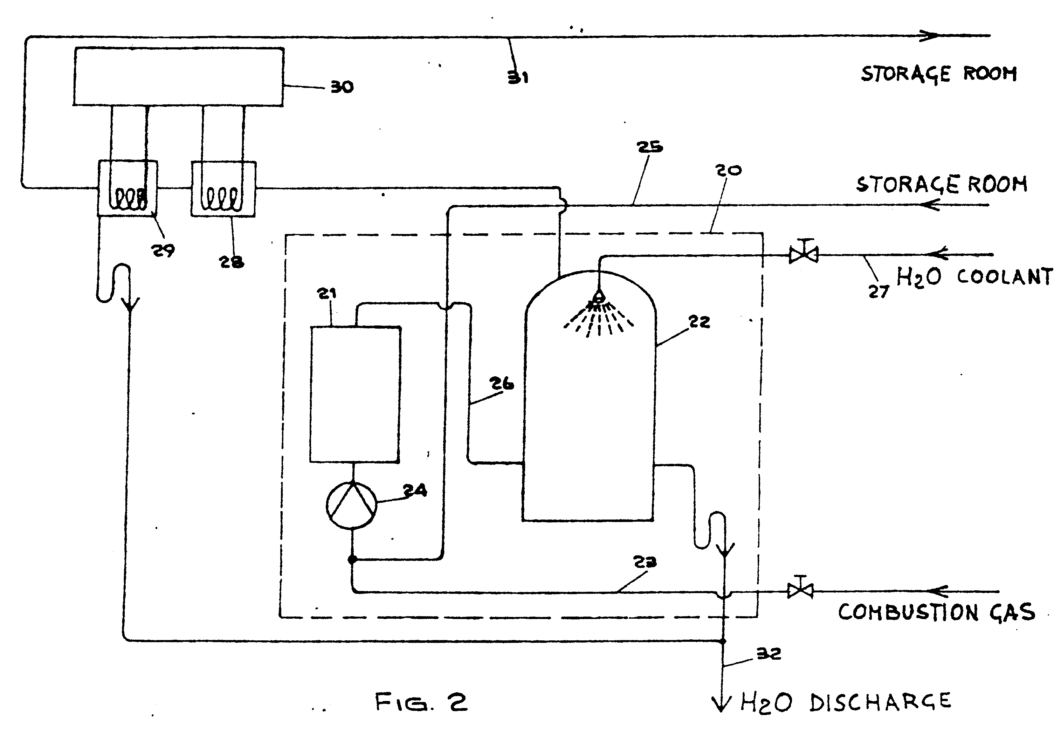

In Fig. 2 there is shown the diagram of a system according to the invention operating in a closed circuit.

The system comprises an oxygen converter 20 including a catalytic chamber 21 and a cooling tower 22. The catalytic chamber 21 has an input connected by means of a conduit 23 to a combustion gas source through a fan 24, upstream which a conduit 25 connected to the gas tight food storage room, not shown, is connected to the conduit 23. The cooling tower 22 has a first input connected by means of a conduit 26 to the output of the heated catalytic chamber 21 and a second input connected by means of a conduit 27 to a water refrigeration plant.

The cooling tower has a first output connected by means of a conduit 31, through an evaporator 28 and a condenser 29 being part of a refrigeration plant 20, to the food storage room. A discharge conduit 32 collects water both from the condenser 29 and the cooling tower 22.

The system of Fig. 2 operates as follows:

Air drawn from the gas tight food storage room enters the catalytic chamber 21, where by means of the introduction of a suitable quantity of combustible gas, a reduction of the oxygen at a temperature of 350°C takes place. Assuming that the combustible gas is propane, the following reaction will take place:
$$C_3 H_8 + 5O_2 = 3OO_2 + 4H_2O$$
As is seen, from the reaction no CO or unburnt residues result.

The so generated inert atmosphere is supplied to the cooling tower 22 where it is cooled and flows thereafter in the evaporator 28 and the condenser 29 where their humidity is controlled and is supplied finally through the conduit 31 to the food storage room.

By this system the $CO_2$ quantity in each flow through the converter is reduced until the desired asphyctic atmosphere is achieved.

The converter, once the atmosphere of the storage room has been brought to the desired rate, maintains the $O_2$ at the desired levels, by entering automatically in operation each time the $O_2$ level exceeds the predetermined level. More particularly, an analizer (not shown) analizes the atmosphere of the food storage room and when the oxygen percentage exceeds a predetermined value renders automatically again operative the oxygen converter 20 which, as is seen, operates intermittently.

**Claims**

1. A method of pest controlling foods, characterized in that it comprises the steps of providing an inert $O_2$ lacking atmosphere with $O_2$ between O and 5%, $CO_2$ between 1 and 20% and the balance $N_2$, exposing the food to said atmosphere in a gas tight food storage room, and maintaining said atmosphere in the food storage room until the full mortality of the food pest.

2. A method as claimed in claim 1, characterized in that the inert atmosphere is heated to a temperature higher than the ambient temperature and is maintained to said temperature.

3. A system for carrying out the method as claimed in claim 1 or 2, characterized in that it comprises an inert atmosphere generator having two inputs, the one connected to an air intake and the other to a combustion gas or other combustible intake, and a cooling tower also provided with two inputs, the one connected to the output of the inert atmosphere generator and the other to a cooling water intake, and further provided with two outputs, the one connected to a gas tight food storage room and the other to a cooling water discharge.

4. A system as claimed in claim 3, characterized in that the inert atmosphere generator comprises a combustion chamber provided with at least one burner having an input connected to the atmosphere and the other input connected to a conduit for supplying combustion gas or other combustible.

5. A system as claimed in claim 4, characterized in that a catalytic chamber is interposed between the output of the combustion chamber and an input of the cooling tower.

6. A system as claimed in claim 3, characterized in that the inert atmosphere generator consists of an oxygen converter comprising a catalytic chamber having an input connected to the food storage room and to a combustion gas supply conduit.

7. A system as claimed in any of claims 3 to 6, characterized in that an evaporator and a condenser being part of a refrigeration plant are inserted in the conduit going from the output of the cooling tower to the food storage room.

8. A system as claimed in any of claims 3 to 7, characterized in that a heat exchanger is inserted in the conduit going from the output of the cooling tower to the food storage room.

9. A system as claimed in claim 3, characterized in that it comprises a main burner and a secondary burner to enable to burn, depending on the requirements, different quantities of air - combustion gas misture.

10. A system as claimed in claim 3, characterized in that the inert atmosphere generator comprises one or two modulating valves which are connected between the air input B and an input of the cooling tower and are controlled by an analysis system, which valves, by changing the ratio between air and gas, keep constant the $O_2$ percentage at the output of the generator.

Fig. 1

0221856

FIG. 2

STORAGE ROOM

STORAGE ROOM

H₂O COOLANT

COMBUSTION GAS

H₂O DISCHARGE

0221856